(19) Europäisches Patentamt
European Patent Office
Office européen des brevets

(11) **EP 1 018 654 B1**

(12) **FASCICULE DE BREVET EUROPEEN**

(45) Date de publication et mention
de la délivrance du brevet:
**16.04.2008 Bulletin 2008/16**

(51) Int Cl.:
***G01S 7/292*** *(2006.01)*

(21) Numéro de dépôt: **99403053.4**

(22) Date de dépôt: **07.12.1999**

(54) **Procédé de détection, notamment de petites cibles marines**

Entdeckungsverfahren, insbesondere für kleine Wasserziele

Detection method, mainly for small marine targets

(84) Etats contractants désignés:
**DE FR GB IT**

(30) Priorité: **11.12.1998 FR 9815698**

(43) Date de publication de la demande:
**12.07.2000 Bulletin 2000/28**

(73) Titulaire: **Thales**
**75008 Paris (FR)**

(72) Inventeurs:
  • **Chabah, Myriam,**
    **Thomson-CSF Propriété Intellect.**
    **94117 Arcueil Cédex (FR)**
  • **Marchalot, Gabriel,**
    **Thomson-CSF Propriété Intel.**
    **94117 Arcueil Cédex (FR)**
  • **Quellec, Jean-Michel,**
    **Thomson-CSF Propriété Intel.**
    **94117 Arcueil Cédex (FR)**

(74) Mandataire: **Lucas, Laurent Jacques et al**
**Marks & Clerk France**
**31-33 Avenue Aristide Briand**
**94117 Arcueil Cedex (FR)**

(56) Documents cités:
**FR-A- 2 683 913          US-A- 4 837 579**

## Description

La présente invention concerne un procédé de détection d'une cible par un radar en présence de bruit. Elle s'applique notamment pour la détection de petites cibles marines, évoluant par exemple dans un fouillis de mer important.

Les missions de patrouille maritime introduisent des conditions de détection spécifiques. En premier lieu, les missions de surveillance nécessitent d'observer sur 360 degrés et d'assurer une couverture radar étendue. L'antenne radar est donc rotative et les angles d'incidence sont rasants de manière à atteindre des portées radar de plus de 30 milles nautiques pour une altitude de l'ordre de 2000 pieds. En second lieu, la détection s'effectue en temps réel, ce qui limite le temps de calcul disponible et la complexité des algorithmes de détection. Enfin, en troisième lieu, les traitements Doppler classiques sont souvent inopérants puisque le critère de détection utilise les écarts de vitesse entre la cible et les échos parasites dus aux vagues et connus sous le terme de clutter ou fouillis de mer. Or le clutter est mobile et les cibles telles que des bateaux de survie peuvent se déplacer au rythme des vagues. Ainsi, les traitements de détection s'effectuent généralement sur des signaux incohérents.

Pour ces raisons, les traitements mis en oeuvre dans le cadre de la patrouille maritime consistent en un filtrage adapté sur des signaux incohérents. Ils ne peuvent notamment pas effectuer de traitement de phases et utilisent simplement le niveau énergétique du signal rétrodiffusé pour distinguer le retour de la cible de celui du clutter. Les moyens anti-clutter développés cherchent ainsi à augmenter le rapport signal à clutter en diminuant la taille de la cellule de résolution. A cet effet, une compression d'impulsions est effectuée pour obtenir une résolution de l'ordre du mètre par exemple, et la largeur du lobe d'antenne du radar est réduite de façon à obtenir une largeur à 3dB de l'ordre du degré. Dans le cadre de la patrouille maritime, les dispositifs de détection tiennent compte de la durée de corrélation du clutter de mer en mettant un place un critère d'intégration de tour à tour dit du type N/M. Selon un tel critère, une cible est supposée exister si un écho correspondant a été détecté au moins un nombre N de fois donné sur chacun d'un nombre M de tours. La vitesse de rotation de l'antenne devient ainsi un facteur clé de la détection. Si cette vitesse est importante, le nombre de tours pendant lesquels la cible éventuelle peut être détectée est grand mais elle est en contrepartie balayée rapidement par le lobe d'antenne pendant un tour. La décorrélation du clutter de mer de tour à tour est alors faible. Pour favoriser la détection sur chaque tour, il faut donc diminuer la vitesse de rotation, mais le nombre d'opportunités de détection est alors réduit. Actuellement, les deux alternatives sont mises en oeuvre. Il existe donc des radars de patrouille maritime avec une grande vitesse de rotation d'antenne, de l'ordre de 200 tours par minute, et des radars de patrouille maritime avec une vitesse de rotation d'antenne moyenne, de l'ordre de 30 tours par minute.

Cependant, les traitements actuellement mis en oeuvre ne permettent plus de répondre à des exigences de plus en plus sévères imposées aux patrouilles maritimes. Des détections sont désormais attendues pour des mers de plus en plus fortes, par exemple pour des états de mer de 4 à 5, pour des cibles de surfaces équivalentes radar SER de plus en plus faibles, par exemple de 1 à 5 m$^2$, et donc pour des rapports de signal utile à clutter de plus en plus faibles. Par ailleurs, les probabilités de fausse alarme demandées peuvent être de l'ordre de $10^{-5}$ à $10^{-6}$, ce qui correspond sensiblement au débit qu'un opérateur radar peut gérer sans être débordé par le nombre d'échos allumés. Un niveau de seuil correspondant à ces taux de fausse alarme est difficilement conciliable avec une détection classique de petites cibles qui produit un taux de fausses alarmes beaucoup plus important.

Outre le fait qu'il est nécessaire d'opérer à des rapports de signal à clutter de plus en plus bas, la nature même du clutter ou fouillis de mer, à haute résolution, sous des angles d'incidence rasants et pour des mers fortes, change et accroît encore elle-même la sévérité des conditions de détection. Ainsi, les différences entre les signaux rétrodiffusés par le fouillis de mer et par une cible ponctuelle sont atténuées. Pour mieux cerner le problème de cette détection, il est possible d'examiner une modélisation simple de la rétrodiffusion sur la surface de la mer par des plans inclinés sur lesquels est superposée une rugosité de petite échelle, de l'ordre par exemple de la longueur d'onde radar. A ces incidences proches de la verticale ou à de mauvaises résolutions, la rugosité est écrasée. Elle intervient alors peu dans le phénomène de rétrodiffusion qui dépend essentiellement de la pente des plans tangents. Il apparaît aisément que lorsque l'incidence radar devient rasante et lorsque la résolution s'améliore, la rugosité devient un facteur déterminant de rétrodiffusion. Il en résulte des effets de masquage et de chemins multiples qui se traduisent physiquement par l'apparition de pointes de clutter encore appelée « spikes », qui se détachent sur un fond de fouillis de niveau faible. Lorsqu'un test sur la puissance du signal est effectué, ces pointes dépassent le seuil de détection et déclenchent de fausses alarmes. Il apparaît par ailleurs que ces pointes sont liées aux déferlements.

Certains résultats connus permettent d'améliorer les algorithmes de détection. Il est connu notamment que l'analyse du signal incohérent montre que les échos forts allongent la queue de distribution de l'amplitude du fouillis de mer qui est souvent représenté par une loi K. Plus généralement, le fouillis de mer n'est plus modélisé statistiquement par un processus distribué selon une loi de Gauss, mais plutôt par un processus gaussien composé, c'est-à-dire un processus gaussien multiplié par une variable aléatoire. Un processus distribué selon une loi K est un processus gaussien composé particulier. Il est aussi connu que l'analyse d'un signal complexe révèle que la largeur de bande du fouillis de mer augmente avec l'apparition des pointes précitées, les « spikes », car la diversité des vitesses des particules réfléchissantes liées aux déferlements de vagues, telles que les embruns par exemple, élargit le spectre Doppler. Il est encore connu que la signature Doppler des déferlements est caractéristique de l'apparition de réflecteurs rapides. Les structures réfléchissantes situées au niveau d'une crête de la vague prête à déferler acquièrent sa vitesse de phase élevée, puis décélèrent au cours du temps. Enfin, il est connu que les vagues sont modulées en amplitude et déferlent lorsqu'une crête passe par le maximum de la modulation qui correspond au point d'instabilité maximale. Le déplacement des déferlements est donc lié à la vitesse relative des crêtes par rapport à la modulation, alors que la fréquence Doppler du fouillis de mer traduit la vitesse des crêtes uniquement. Ainsi, contrairement à une cible ponctuelle de fréquence Doppler peu fluctuante, le pistage d'une pointe de clutter par l'estimation de sa fréquence Doppler est inadapté.

Les limitations des traitements classiques sont donc de plusieurs ordres, les limitations suivantes pouvant notamment être citées :

- Les algorithmes de détection classiques fondés sur le filtrage adapté, se traduisant par une corrélation puis une détection d'enveloppe, sont optimaux dans du bruit gaussien alors que le fouillis de mer est mieux représenté par un processus gaussien composé ;
- La détection incohérente ne permet pas de distinguer la cible des pointes de clutter pour des cibles ponctuelles de faible surface équivalente radar SER, une détection cohérente semble mieux indiquée dans le cas de présence de pointes de clutter et de déferlements puisque l'énergie est concentrée sur une bande de fréquences réduite dans le cas d'une cible ponctuelle, et est dispersée sur une bande plus large dans le cas de déferlements ;
- L'intérêt de l'intégration tour à tour telle qu'elle est pratiquée est limitée car on augmente la taille de la cellule de résolution en pratiquant des regroupements en distance, notamment pour des problèmes de tailles de mémoires. La probabilité de présence et de détection d'une pointe de clutter, sans même tenir compte de sa durée d'existence, dans une zone élargie, est alors augmentée et le critère de détection en N/M perd en efficacité. L'intégration tour à tour n'utilise que superficiellement, sous la forme d'un test binaire, présence ou absence d'un écho fort, la décorrélation plus rapide du fouillis de mer de tour à tour. Elle ne joue pas notamment sur des valeurs de changements de fréquences. Cet aspect binaire dégrade l'information contenue dans les N tours au but, qui correspondent à la présence de la cible.

Un but de l'invention est notamment de remédier à ces différentes limitations, en globalisant le traitement de détection sur tous les tours pendant lesquels la cible est susceptible d'être présente, et plus particulièrement en combinant les signaux des différents tours au niveau des cellules de résolution élémentaires. En fait, un but de l'invention est de permettre la détection d'une cible, notamment marine et de petite taille, en présence d'un fort fouillis de mer, et avec un taux de fausse alarme le plus faible possible, en particulier compatible des exigences opérationnelles. A cet effet, l'invention généralise le principe du détecteur « corrélateur-détecteur d'enveloppe » en l'étendant au domaine temps-fréquence, de façon à profiter de la dispersion fréquentielle des échos de mer et en utilisant tous les tours au but de la cible. Plus particulièrement, l'invention a pour objet un procédé de détection d'une cible par un radar en présence de bruit, la détection étant effectuée sur M tours d'antenne, caractérisé en ce qu'il comporte au moins :

- une première étape d'estimation de la fréquence Doppler $\left(\hat{f}_d\right)$ de la cible ;

- une deuxième étape de pistage sur M tours ;

- une étape de détection, la cible étant détectée si une grandeur associée Z est supérieure ou égale à un seuil S prédéterminé, la grandeur Z étant définie selon la relation suivante :

$$Z = \underset{t \in D_t, f \in D_f}{\text{Max}} \left( \sum_{k=-N_d}^{N_d} \sum_{i=1}^{M-1} \frac{\left|C_{z,z_i^k}(t,f,G)\right|}{N(0,0,i,k)} + \sum_{k=-N_d}^{N_d} \sum_{l=-N_d}^{N_d} \sum_{i=1}^{M-1} \sum_{j=i+1}^{M-1} \frac{\left|C_{z_i^k,z_j^l}(t,f,G)\right|}{N(i,k,j,l)} \right)$$

- $D_t$ étant le domaine de temps $[-t_0, t_0]$, $t_0$ étant fixé en fonction des erreurs possibles de cadrage des signaux de tour à tour ;

- $D_f$ étant le domaine de fréquences $\left[\hat{f}_d - f_0, \hat{f}_d + f_0\right]$, $f_0$ étant fixé en fonction des erreurs possibles d'estimation de la fréquence Doppler ;

- z étant le signal au tour d'antenne analysé noté « 0 », à la case distance analysée notée « 0 » ;

- $z_i^k$ étant le signal obtenu par pistage au tour i du signal z, en tenant compte de l'erreur de pistage éventuelle, c'est-à-dire décalé de k cases distance par rapport à la case distance estimée ;

- $C_{z,z_i^k}$ (t,f,G) étant la transformée de Cohen des signaux z et $z_i^k$ de noyau G, calculée au temps t et à la fréquence f ;

- $C_{z_i^k,z_j^l}$ (t,f,G) étant la transformée de Cohen des signaux $z_i^k$ et $z_j^l$ de noyau G, calculée au temps t et à la fréquence f ;

- $2N_d$ + 1 étant le nombre de cases distance prises en compte, selon l'erreur éventuelle de pistage ;

- N(i, k, j, l) étant une normalisation.

L'invention a pour principaux avantages qu'elle n'exige pas de capacités de calculs particulières, qu'elle peut s'adapter sur des matériels existant et qu'elle est économique.

D'autres caractéristiques et avantages de l'invention apparaîtront à l'aide de la description qui suit faite en regard de dessins annexés qui représentent :

- la figure 1, une présentation d'étapes possibles du procédé selon l'invention ;
- la figure 2, une illustration de la deuxième étape du procédé selon l'invention, où le nombre de tours d'antenne sur lequel est basé la détection est égal à deux, cette figure présentant notamment des cellules de résolution au premier tour, à un instant t, et au deuxième tour, à un instant t+$\Delta$t.

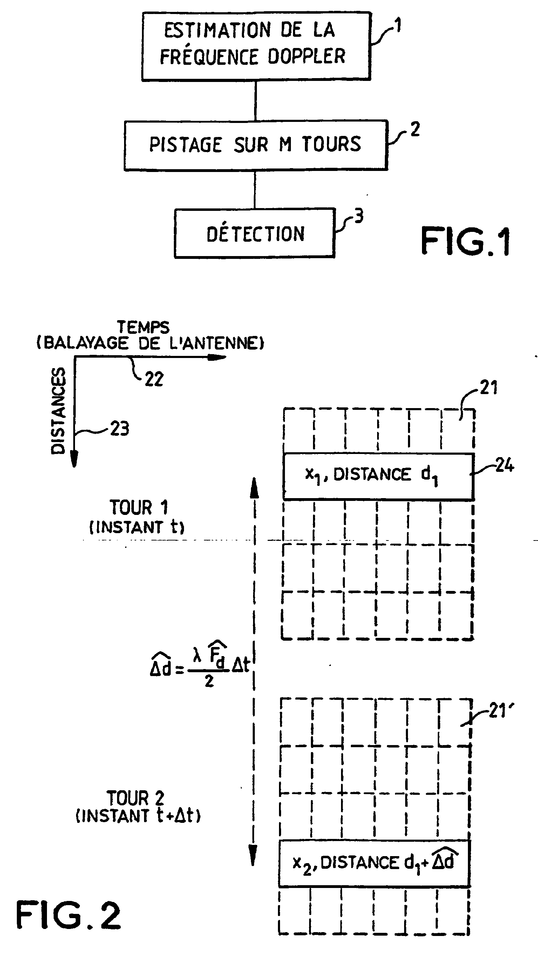

La figure 1 présente les différentes étapes possibles du procédé selon l'invention. Le procédé comporte une première étape 1 d'estimation de la fréquence Doppler. Dans cette étape, la fréquence Doppler est estimée pour chaque cible candidate d'un tour d'antenne analysé, c'est-à-dire pour chaque lobe d'antenne, selon le critère connu du maximum de vraisemblance généralisé. Le clutter est supposé être blanc, c'est-à-dire que cette première étape peut suivre une étape éventuelle de blanchiment du clutter. Il est supposé dans ce cas que cette éventuelle étape a peu affecté la forme de l'écho d'une cible x(t), défini par la relation (1) qui suit :

$$x(t) = \alpha\ s(t) \qquad\qquad (1)$$

où $\alpha$ est un paramètre complexe inconnu et s(t) vérifie la relation suivante :

$$s(t) = a(t)e^{j2\pi F_d t} \qquad\qquad (2)$$

$F_d$ étant la fréquence complexe inconnue, a(t) étant un vecteur réel connu qui module l'amplitude de la cible, et t représentant le temps.

En considérant les valeurs échantillonnées, c'est-à-dire en considérant que t est égal à $nT_e$, où $T_e$ est la période d'échantillonnage et

donc t est encore égal à $n/F_R$, où $F_R$ est la fréquence de récurrence du signal radar et n varie de 0 à N-1, il s'ensuit que le signal échantillonné x(n) qui représente l'une des N présences de cibles au cours d'un tour d'antenne, peut encore s'exprimer selon la relation suivante :

$$s(n) = a(n)e^{j2\pi F_d \frac{n}{F_R}} \qquad\qquad (3)$$

En résumé, dans l'un des M tours d'antenne, un écho de cible peut être représenté par une suite de N échantillons tels qu'exprimés par la relation (3), au coefficient $\alpha$ près de la relation (1).

Le fouillis de mer est par exemple modélisé par un vecteur gaussien composé noté c(n) et défini selon l'échantillon suivant :

$$c(n) = u\ g(n) \qquad\qquad (4)$$

où u est une variable aléatoire non-négative et g un vecteur aléatoire gaussien.

Il est supposé qu'un écho échantillonné z(n) peut être déterminé selon les deux hypothèses suivantes $H_0$, $H_1$ :

$$H_0 : z(n) = c(n) \qquad\qquad (5)$$

hypothèse qui correspond au cas où l'écho ne contient que du clutter ;

$$H_1 : z(n) = x(n) + c(n)$$

hypothèse qui correspond au cas où l'écho échantillonné z(n) comporte un l'écho du clutter c(n) mais aussi l'écho de cible x(n) ;

Un article de E.Conte, M.Lops et G.Ricci « Asymptotically optimum radar détection in compound-gaussian clutter » (IEEE Trans.Electron.Syst., vol.31, n°2, avril 1995, pages 617-625) montre que l'estimation de la fréquence Doppler de la cible, dans du bruit gaussien composé, obtenue par le critère du maximum de vraisemblance généralisé, notée $\hat{f}_d$ , est donnée par la relation synthétique suivante :

$$\hat{f}_d = \text{ArgMax}_{f_d}\, (s^H z) \qquad\qquad (6)$$

qui signifie, formulé sous une forme condensée, que $\hat{f}_d$ est l'argument qui maximise le module de $s^H z$. L'exposant « H » signifie que le vecteur est transposé et conjugué. En reprenant la formulation non échantillonnée des signaux, il s'agit, pour obtenir $\hat{f}_d$ de sélectionner la fréquence f qui maximise la grandeur M(f) définie selon la relation suivante :

$$M(f) = \left| \int z(t) a(t)^* e^{-j2\pi ft} dt \right| \qquad\qquad (7)$$

z(t) est l'écho reçu en fonction du temps au premier tour d'antenne considéré. Le signe * en exposant exprime le fait que c'est la grandeur conjuguée qui est prise en compte. L'intégrale de la relation (7) est calculée sur la durée des signaux, c'est-à-dire entre l'instant initial $t_0$ et l'instant $t_0+(N-1)T_e$, où $T_e$ est la période d'échantillonnage. Les intégrales qui seront présentées par la suite, dont le formalisme sera dépourvu de bornes, seront calculées sur la durée des signaux.

En pratique, la fréquence Doppler est donc estimée en formant les voies vitesse par transformée de Fourier de l'écho z(n), pondéré par une fenêtre définie par le conjugué de a(n) et en sélectionnant la voie la plus énergétique.

Le procédé selon l'invention comporte par exemple une deuxième étape 2 de pistage sur M tours, M étant le nombre de tours d'antenne précité et prédéterminé. Dans cette étape, on se place sous l'hypothèse $H_1$ précédente et l'on détermine les cellules de résolution où se situe la cible au cours des M tours, en faisant par ailleurs l'hypothèse que sa fréquence Doppler fluctue peu d'un tour à l'autre.

La figure 2 illustre cette deuxième étape pour un exemple où M=2. Cette figure présente notamment des cellules de résolution 21, 21' au premier tour, à un instant t, et au deuxième tour, à un instant t+Δt. Ces cellules de résolution, en distance et en temps, s'étendent selon un axe des temps 22, lié au balayage de l'antenne, et un axe des distances 23. Le déplacement radial d'une cible est déduit de l'estimation de sa fréquence Doppler $\hat{f}_d$ . Ainsi, au premier tour, un écho $x_1$ provenant d'une cible située à une distance $d_1$ du radar occupe un ensemble 24 de cellules de résolution de même distance $d_1$. A chaque cellule est associé un échantillon $x_1(n)$ de l'écho, une cellule correspondant à une récurrence radar. Au deuxième tour, l'écho $x_2$ provenant de cette même cible indique que cette dernière est à une distance $d_2 = d_1 + \frac{\lambda \hat{f_d}}{2} \Delta t$, où $\Delta t$ représente le temps écoulé entre les deux tours et $\lambda$ est la longueur d'onde du radar. La fréquence Doppler $\hat{f_d}$ est estimée selon la première étape 1.

En généralisant à M tours, le déplacement estimé de la cible entre le premier tour, noté 0, et un tour d'ordre i, i étant compris entre 1 et M, est donné par la relation suivante :

$$\hat{\Delta d_i} = \frac{\lambda \hat{f_d}}{2} i \Delta t \qquad (8)$$

où $\hat{\Delta d_i}$ est l'estimation du déplacement de la cible pendant le temps i$\Delta$t correspondant à la durée de i tours et $\hat{f_d}$ est la fréquence estimée, conformément à la première étape 1 du procédé selon l'invention. Etant donné la faible résolution en azimut, de l'ordre de plusieurs centaines de mètres lorsque l'on détecte sur une zone distante d'une dizaine de kilomètres, il est légitime de négliger le déplacement azimutal sur les M tours.

Chaque cellule élémentaire 21 du premier tour est reliée à M-1 cellules 21' des tours suivants. L'article de Conte et al précité ainsi qu'un article de F.Gini « Sub-optimum coherent radar detection in a mixture of K-distributes and gaussian clutter. IEE Proc.-Radar Sonar Navig., vol.144, n°1, février 1997, pages 39-48 » ont montré l'intérêt d'un détecteur obtenu en comparant la grandeur y définie par la relation (9) suivante à un seuil déterminé par la probabilité de fausse alarme désirée :

$$y = \frac{\left|s^H z\right|^2}{\left(s^H s\right)\left(z^H z\right)} \qquad (9)$$

Le produit $(s^H s)$ étant indépendant de l'observation de z, un détecteur équivalent est obtenu en comparant la grandeur y' définie ci-dessous par la relation (10) à un seuil déterminé par la probabilité de fausse alarme désirée :

$$y' = \frac{\left|s^H z\right|^2}{\left(z^H z\right)} \qquad (10)$$

Selon l'invention, ce détecteur est généralisé sur les M tours d'antenne. Cette généralisation fait l'objet d'une troisième étape de détection de la cible. Dans cette étape, l'invention exploite notamment le fait qu'il y a une décorrélation en fréquence des pointes de clutter ou « spikes » précités. En d'autres termes, l'invention exploite le fait que la fréquence d'un signal reçu d'une pointe de clutter est différente d'un tour à l'autre. A cet effet, les différentes grandeur $y_i'$ définies par la relation (11) suivante sont combinées

$$y_i' = \frac{\left|s^H z_i\right|^2}{\left(z_i^H z_i\right)} \qquad (11)$$

$z_i$ étant le signal reçu au tour d'antenne d'ordre i, sélectionné dans la deuxième étape par pistage de l'écho z du premier tour d'antenne, i varie de 0 à M-1, i=0 correspondant au premier tour d'antenne. Une comparaison à un seuil S est effectuée sur une grandeur T définie selon la relation suivante :

$$T = \sum_{i=0}^{M-1} \sum_{j=i+1}^{M-1} \sqrt{y_i' y_j'} \qquad (12)$$

et selon la relation (12), il vient :

$$T = \sum_{i=0}^{M-1} \sum_{j=i+1}^{M-1} \frac{\left|s^H z_i\right|\left|s^H z_j\right|}{\sqrt{\left(z_i^H z_i\right)\left(z_j^H z_j\right)}} \qquad (13)$$

Le produit des modules $|s^H z_i||s^H z_j|$ s'exprime en fonction des signaux non échantillonnés s, par la relation suivante :

$$\left|s^H z_i\right|\left|s^H z_j\right| = \left|\left(s^H z_i\right)\left(s^H z_j\right)^*\right| = \left|\left(\int z_i(t)s(t)^* dt\right)\left(\int z_j(t)s(t)^* dt\right)^*\right| \qquad (14)$$

Une interprétation de cette relation est possible au moyen de la formule de Moyal généralisée (J.E.Moyal - Quantum mecanics as a statistical theory. Proc.Cambridge Phil.Soc., vol.45, 1949, pages 99-124), soit :

$$\left(\int z_i(t)s(t)^* dt\right)\left(\int z_j(t)s(t)^* dt\right)^* = \iint W_{z_i,z_j}(t,v) W_{s,s}(t,v)^* dt \qquad (15)$$

où $W_{z_i,z_j}(t,v)$ est la transformée croisée de Wigner-Ville des échos $z_i(t)$ et $z_j(t)$, reçus respectivement aux tours i et j. Cette transformée, fonction du temps t et de la fréquence $v$ est donnée par la relation suivante, la variable $\tau$ exprimant un retard :

$$W_{z_i,z_j}(t,v) = \int z_i(t+\frac{\tau}{2})z_j(t-\frac{\tau}{2})^* e^{-j2\pi v\tau} d\tau \qquad (16)$$

Par ailleurs, on considère la transformée de Cohen des signaux $z_i(t)$ et $z_j(t)$, notée $C_{z_i,z_j}(t, v, G)$, qui est la transformée de Wigner-Ville filtrée en temps t et en fréquence $v$ par la transformée de Fourier inverse $g(t, v)$ d'un noyau G.
La transformée de Cohen $C_{z_i,z_j}(t, v, G)$ est ainsi définie selon la relation suivante :

$$C_{z_i,z_j}(t,v,G) = \iint g(\delta - t, \varepsilon - v) W_{z_i,z_j}(\delta,\varepsilon) d\delta d\varepsilon \qquad (17)$$

où :

$$g(t, \nu) = \iint G(\varepsilon, \tau)e^{j2\pi(\nu\tau+\varepsilon t)}d\varepsilon d\tau \qquad (18)$$

En utilisant la définition de la transformée de Cohen de noyau $G = A_{s,s}^*$, où $A_{s,s}$ est la fonction d'ambiguïté radar, cette fonction étant la transformée de Fourier inverse de $W_{s,s}$, il vient, pour $t=0$, et pour $\nu=0$ :

$$C_{z_i,z_j}(0,0,A_{s,s}^*) = \iint g(\delta, \varepsilon)W_{z_i,z_j}(\delta, \varepsilon)d\delta d\varepsilon$$

selon la relation (17)

et :

$$g(t, \nu) = W_{s,s}^*(t, \nu) = \iint A_{s,s}^*(\varepsilon, \tau)e^{j2\pi(\nu\tau+\varepsilon t)}d\varepsilon d\tau$$

selon la relation (18)

Finalement, la transformée de Cohen des signaux $z_i(t)$ et $z_j(t)$ en fonction du noyau $A_{s,s}^*$, pour $t=0$ et $\nu=0$ vérifie la relation suivante :

$$C_{z_i,z_j}(0,0,A_{s,s}^*) = \iint W_{z_i,z_j}(\delta, \varepsilon)W_{s,s}^*(\delta, \varepsilon)d\delta d\varepsilon \qquad (19)$$

et d'après la formule de Moyal de la relation (15), il vient :

$$\left(\int z_i(t)s_i(t)^* dt\right)\left(\int z_j(t)s_j(t)^* dt\right)^* = \left|C_{z_i,z_j}(0,0,A_{s,s}^*)\right| \qquad (20)$$

Le produit $|s^H z_i)\|s^H z_j|$ est donc identifié à $\left|C_{z_i,z_j}(0,0,A_{s,s}^*)\right|$. La grandeur T du test, établie selon la relation (13) peut donc s'écrire de la façon suivante :

$$T = \sum_{i=0}^{M-1} \sum_{j=i+1}^{M-1} \frac{\left|C_{z_i,z_j}(0,0,A_{s,s}^*)\right|}{\sqrt{\left(z_i^H z_i\right)\left(z_j^H z_j\right)}} \qquad (21)$$

Le signal s s'exprimant selon la relation (2), il vient, d'après les relations (17) et (18) :

$$C_{z_i,z_j}(0,0,A_{s,s}^*) = C_{z_i,z_j}(0,F_d,\left|A_{s,s}\right|) \qquad (22)$$

La grandeur T s'exprime alors selon la relation suivante, en considérant non pas la fréquence Doppler réelle, mais son estimée $\hat{f_d}$ :

$$T = \sum_{i=0}^{M-1} \sum_{j=i+1}^{M-1} \frac{\left| C_{z_i,z_j}(0,\hat{f_d},|A_{s,s}|\right|}{\sqrt{\left(z_i^H z_i\right)\left(z_j^H z_j\right)}} \qquad (23)$$

Une cible est détectée si cette grandeur T qui lui est associée est supérieure ou égale à un seuil S prédéterminé.

Il apparaît ainsi que le détecteur « corrélateur-détecteur d'enveloppe » est modifié de façon à introduire, outre la corrélation entre le signal et la cible, la corrélation du signal au tour i avec le signal au tour j. En effet, la transformée de Wigner-Ville $W_{z_i,z_j}(t,\hat{f_d})$ mesure la corrélation entre les tours i et j, puis le filtrage par le noyau $A_{s,s}^*$ se traduit par la corrélation avec la transformée de Wigner-Ville du signal cible attendu, comme le montre la relation (19). Ce formalisme permet d'adapter le traitement en fonction de l'information détenue sur la cible. Si la modulation d'amplitude a(n) de la cible est inconnue, il est possible de remplacer le noyau $A_{s,s}^*$ par un noyau G utilisé classiquement dans les transformées de Cohen. Sa forme peut être par exemple ajustée de manière à atténuer le niveau de la transformée de Cohen de deux signaux $z_i$ et $z_j$ de fréquences Doppler éloignées, c'est-à-dire en fait d'atténuer le module $\left| C_{z_i,z_j}(0,\hat{f_d},G) \right|$. C'est un moyen d'éliminer les échos de fouillis de mer décorrélés en fréquence entre deux tours.

La taille de la zone distance-temps-fréquence sur laquelle est effectuée le test sur la grandeur T dépend de la qualité de l'estimation de la fréquence Doppler $\hat{f_d}$ et du pistage de la cible. Ainsi, de manière à tenir compte des erreurs de pistage éventuelles, il est possible d'inclure dans les combinaisons du test sur la grandeur T les échos des cases distance adjacentes aux cases distances pistées initialement. De plus, de façon à se protéger de décalages temporels ou fréquentiels entre les signaux cible aux tours i et j, il est par exemple possible d'effectuer la décision dans le plan temps-fréquence sur un domaine élargi.

La détection est effectuée sur une grandeur Z. La cible est détectée si Z est supérieure ou égale à un seuil déterminé en fonction de la fausse alarme désirée, la grandeur Z étant définie selon la relation (24) suivante :

$$Z = \underset{t\in D_t, f\in D_f}{\text{Max}} \left( \sum_{k=-N_d}^{N_d} \sum_{i=1}^{M-1} \frac{\left| C_{z,z_i^k}(t,f,G) \right|}{N(0,0,i,k)} + \sum_{k=-N_d}^{N_d} \sum_{l=-N_d}^{N_d} \sum_{i=1}^{M-1} \sum_{j=i+1}^{M-1} \frac{\left| C_{z_i^k,z_j^l}(t,f,G) \right|}{N(i,k,j,l)} \right)$$

La relation (24) exprime le fait que Z est le maximum considéré pour tous les temps t compris dans le domaine $D_t$ et pour toutes les fréquences f comprises dans le domaine $D_f$.

$D_t$ est le domaine de temps [$-t_0$, $t_0$], $t_0$ étant fixé en fonction des erreurs possibles de cadrage des signaux de tour à tour.

$D_f$ est le domaine de fréquences $\left[ \hat{f_d} - f_0, \hat{f_d} + f_0 \right]$, $f_0$ étant fixé en fonction des erreurs possibles d'estimation de la fréquence Doppler.

z est le signal au tour d'antenne analysé noté « 0 », à la case distance analysée notée « 0 ».

$z_i^k$ est le signal obtenu par pistage au tour i du signal z, en tenant compte de l'erreur de pistage éventuelle, c'est-à-dire décalé de k cases distance par rapport à la case distance estimée. $Z_i^k$ est par exemple obtenu au cours de la deuxième étape de pistage. Les signaux z et $z_i^k$ sont éventuellement blanchis.

$C_{z_i^k, z_j^l}$ (t,f,G)est la transformée de Cohen des signaux $z_i^k$ et $z_j^l$ de noyau G, calculée au temps t et à la fréquence f, $C_{z, z_i^k}$ (t,f,G) étant la transformée de Cohen des signaux z et $z_i^k$ de noyau G, calculée au temps t et à la fréquence f.

Le noyau G peut être identifié à $|A_{s,s}^*|$ ou bien, le noyau peut correspondre à un noyau classiquement utilisé dans les transformées de Cohen, ajusté de manière à atténuer le niveau de la transformée de Cohen de deux signaux $z_i^k$ et $z_j^l$ de fréquences Doppler éloignées.

$2N_d$ est le nombre de cases distance prises en compte, selon l'erreur éventuelle de pistage.

N(i, k, j, l) est une normalisation éventuelle.

Cette normalisation est donc par exemple égale à 1, c'est à dire que N(i, k, j, l)= N(0, 0, j, l)=1, ce qui signifie en fait qu'elle est inopérante, ou bien elle peut par exemple être définie par :

$$N(i, k, j, l) = \sqrt{\int z_i^k(t) z_i^k(t)^* dt \int z_j^l(t) z_j^l(t)^* dt}$$

et

$$N(0, 0, j, l) = \sqrt{\int z(t) z(t)^* dt \int z_j^l(t) z_j^l(t)^* dt}$$

Le procédé selon l'invention n'exige pas de capacités de calculs particulières. Les étapes du procédé selon l'invention peuvent en effet être mémorisées et traitées dans des circuits numériques standards, pourvu que ces circuits aient des temps de réponse adaptés. L'invention peut notamment être mise en oeuvre sur des matériels déjà existant sans ajout sensible de matériel. De ce qui précède, il résulte aussi que l'invention est économique.

L'invention a été décrite pour la détection d'une cible marine en présence d'un fort fouillis de mer. Elle peut cependant être appliquée pour la détection d'autres cibles, pourvu que notamment que la fréquence Doppler de la cible varie peu.

**Revendications**

**1.** Procédé de détection d'une cible par un radar en présence de bruit, la détection étant effectuée sur M tours d'antenne, **caractérisé en ce qu'**il comporte au moins :

- une première étape (1) d'estimation de la fréquence Doppler $(\hat{f_d})$ de la cible;

- une deuxième étape (2) de pistage sur M tours;
- une étape de détection (3), la cible étant détectée si une grandeur associée Z est supérieure ou égale à un seuil S prédéterminé, la grandeur Z étant définie selon la relation suivante :

$$Z = \underset{t \in D_t, f \in D_f}{\text{Max}} \left( \sum_{k=-N_d}^{N_d} \sum_{i=1}^{M-1} \frac{\left| C_{z, z_i^k}(t, f, G) \right|}{N(0, 0, i, k)} + \sum_{k=-N_d}^{N_d} \sum_{l=-N_d}^{N_d} \sum_{i=1}^{M-1} \sum_{j=i+1}^{M-1} \frac{\left| C_{z_i^k, z_j^l}(t, f, G) \right|}{N(i, k, j, l)} \right)$$

- $D_t$ étant le domaine de temps $[-t_0, t_0]$, $t_0$ étant fixé en fonction des erreurs possibles de cadrage des signaux de tour à tour ;

- $D_f$ étant le domaine de fréquences $\left[ \hat{f_d} - f_0, \hat{f_d} + f_0 \right]$, $f_0$ étant fixé en fonction des erreurs possibles d'estimation de la fréquence Doppler ;
- z étant le signal au tour d'antenne analysé noté « 0 », à la case distance analysée notée « 0 » ;
- $z_i^k$ étant le signal obtenu par pistage au tour i du signal z, en tenant compte de l'erreur de pistage éventuelle, c'est-à-dire décalé de k cases distance par rapport à la case distance estimée ;

- $C_{z,z_i^k}$ (t,f,G) étant la transformée de Cohen des signaux z et $z_i^k$ de noyau G, calculée au temps t et à la fréquence f ;

- $C_{z_i^k,z_j^l}$ (t, f, G) étant la transformée de Cohen des signaux $z_i^k$ $z_j^l$ de noyau G, calculée au temps t et à la fréquence f ;

- $2N_d+1$ étant le nombre de cases distance prises en compte, selon l'erreur éventuelle de pistage ;
- N(i, k, j, l) étant une normalisation

2. Procédé selon la revendication 1, **caractérisé en ce que** le noyau de la transformée de Cohen $|A_{s,s}|$ est le module de la fonction d'ambiguïté du radar.

3. Procédé selon l'une quelconque des revendications précédentes, **caractérisé en ce que** la fréquence Doppler estimée $f_d$ est l'argument qui maximise la grandeur M(f) définie selon la relation suivante :

$$ M(f) = \left| \int z(t)a(t)^* e^{-j2\pi ft} dt \right| $$

où z(t) est l'écho de la cible reçu, en fonction du temps, au premier tour d'antenne considéré et où a*(t) est le conjugué d'un vecteur réel qui module l'amplitude de la cible.

4. Procédé selon l'une quelconque des revendications précédentes, **caractérisé en ce qu'**il comporte une étape de pistage (2) à la suite de la première étape (1) sur les M tours pour déterminer les cellules de résolution où se situe la cible au cours des M tours.

5. Procédé selon l'une quelconque des revendications précédentes, **caractérisé en ce que** la première étape est précédée d'une étape de blanchiment du bruit.

6. Procédé selon l'une quelconque des revendications précédentes, **caractérisé en ce que** la normalisation N (i, k, j, l) est égale à 1.

7. Procédé selon l'une quelconque des revendications précédentes, **caractérisé en ce que** la cible est une cible marine en présence de fouillis de mer.

**Claims**

1. Method of detecting a target with a radar in the presence of noise, the detection being carried over by M antenna rotations, **characterized in that** it comprises at least:

- a first stage (1) of estimating the Doppler frequency $(\hat{f_d})$ of the target;
- a second stage (2) of tracking over M rotations;
- a detection stage (3), the target being detected if an associated quantity Z is greater than or equal to a predetermined threshold S, the quantity Z being defined according to the following equation:

$$Z = \underset{t \in D_t, f \in D_f}{Max} \left( \sum_{k=-N_d}^{N_d} \sum_{i=1}^{M-1} \frac{\left| C_{z,z_i^k}(t,f,G) \right|}{N(0,0,i,k)} + \sum_{k=-N_d}^{N_d} \sum_{l=-N_d}^{N_d} \sum_{i=1}^{M-i} \sum_{j=i+1}^{M-1} \frac{\left| C_{z_i^k, z_j^l}(t,f,G) \right|}{N(i,k,j,l)} \right)$$

- $D_t$ being the time range $[-t_0, t_0]$, $t_0$ being fixed depending on possible errors in framing the signals from rotation to rotation;

- $D_f$ being the frequency range $\left[ \hat{f}_d - f_0, \hat{f}_d + f_0 \right]$, $f_0$ being fixed depending on the possible errors in estimating the Doppler frequency;

- z being the signal at the antenna rotation analysed, referred to as "0", at the distance cell analysed referred to as "0";

- $z_i^k$ being the signal obtained by tracking at rotation i of the signal z, taking account of the possible tracking error, that is shifted by k distance cells in relation to the estimated distance cell;

- $C_{z,z_i^k}$ (t,f,G) being the Cohen transform of the signals z and $z_i^k$ with a kernel G, calculated at time t and frequency f;

- $C_{z_i^k, z_j^l}$ (t,f,G) being the Cohen transform of the signals $z_i^k$ and $z_j^l$ with a kernel G, calculated at time t and frequency f;

- $2N_d + 1$ being the number of distance cells taken into account, in accordance with the possible tracking error; and

- N(i,k,j,l) being a normalization.

2. Method according to Claim 1, **characterized in that** the kernel of the Cohen transform $|A_{s,s}|$ is the modulus of the ambiguity function of the radar.

3. Method according to either of the preceding claims, **characterized in that** the estimated Doppler frequency $\hat{f}_d$ is the argument that maximizes the quantity M(f) defined according to the following equation:

$$M(f) = \left| \int z(t) a(t)^* e^{-j2\pi ft} dt \right|$$

where z(t) is the echo received from the target, as a function of time, at the first rotation antenna considered, and where a*(t) is the conjugate of a real vector that modulates the amplitude of the target.

4. Method according to one of the preceding claims, **characterized in that** it comprises a tracking stage (2), following the first stage (1), over M rotations to determine the resolution cells in which the target is situated during the M rotations.

5. Method according to one of the preceding claims, **characterized in that** the first stage is preceded by a stage of whitening the noise.

6. Method according to one of the preceding claims, **characterized in that** the normalization N(i,k,j,l) is equal to 1.

7. Method according to one of the preceding claims, **characterized in that** the target is a marine target in the presence of sea clutter.

**Patentansprüche**

1. Verfahren zum Erfassen eines Ziels durch einen Radar in Gegenwart von Rauschen, wobei die Erfassung während M Antennenumdrehungen ausgeführt wird, **dadurch gekennzeichnet, dass** es wenigstens enthält:

   - einen ersten Schritt (1) zum Schätzen der Doppler-Frequenz $(\hat{f}_d)$ des Ziels;
   - einen zweiten Schritt (2) zum Verfolgen während M Umdrehungen;
   - einen Erfassungsschritt (3), wobei das Ziel erfasst wird, wenn eine zugeordnete Größe Z größer oder gleich einem vorgegebenen Schwellenwert S ist, wobei die Größe Z gemäß der folgenden Beziehung definiert ist:

$$Z = \underset{t \in D_t, f \in D_f}{\text{Max}} \left( \sum_{k=-N_d}^{N_d} \sum_{i=i}^{M-1} \frac{\left| C_{z,z_i^k}(t,f,G) \right|}{N(0,0,i,k)} + \sum_{k=-N_d}^{N_d} \sum_{l=-N_d}^{N_d} \sum_{i=1}^{M-1} \sum_{j=i+1}^{M-1} \frac{\left| C_{z_i^k,z_j^l}(t,f,G) \right|}{N(i,k,j,l)} \right)$$

   - wobei $D_t$ der Zeitbereich $[-t_0, t_0]$ ist, wobei $t_0$ in Abhängigkeit von möglichen Signalanpassungsfehlern von einer Umdrehung zur nächsten festgelegt wird;
   - wobei $D_f$ der Frequenzbereich $[\hat{f}_d - f_0, \hat{f}_d + f_0]$ ist, wobei $f_0$ in Abhängigkeit von möglichen Schätzfehlern für die Doppler-Frequenz festgelegt wird;
   - wobei z das Signal in der analysierten Antennenumdrehung, die "0" genannt wird, im analysierten Abstandsfeld, das "0" genannt wird, ist;

   - wobei $z_i^k$ das Signal ist, das durch Verfolgen in der Umdrehung i des Signals z unter Berücksichtigung eines eventuellen Verfolgungsfehlers erhalten wird, d. h. das um k Abstandsfelder in Bezug auf das geschätzte Abstandsfeld versetzt ist;

   - wobei $C_{z,z_i^k}(t,f,G)$ die Cohen-Transformierte der Signale z und $z_i^k$ des Kerns G, der zur Zeit t und bei der Frequenz f berechnet wird, ist;

   - wobei $C_{z_i^k,z_j^l}(t,f,G)$ die Cohen-Transformierte der Signale $z_i^k$ und $z_j^l$ des Kerns G, der zur Zeit t und bei der Frequenz f berechnet wird, ist;
   - wobei $2N_d + 1$ die Anzahl berücksichtigter Abstandsfelder je nach eventuellem Verfolgungsfehler ist;
   - wobei N(i, k, j, l) eine Normierung ist.

2. Verfahren nach Anspruch 1, **dadurch gekennzeichnet, dass** der Kern der Cohen-Transformierten $|A_{s,s}|$ der Betrag der Mehrdeutigkeitsfunktion des Radars ist.

3. Verfahren nach einem der vorhergehenden Ansprüche, **dadurch gekennzeichnet, dass** die geschätzte Doppler-Frequenz $\hat{f}_d$ das Argument ist, das die Größe M(f) maximal macht, die gemäß der folgenden Beziehung definiert ist:

$$M(f) = \left| \int z(t)a(t)^* e^{-j2\pi ft} dt \right|$$

wobei z(t) das empfangene Echo des Ziels in Abhängigkeit von der Zeit in der ersten betrachteten Antennenumdrehung ist und wobei a(t)* die Konjugierte eines reellen Vektors ist, der die Amplitude des Ziels moduliert.

4. Verfahren nach einem der vorhergehenden Ansprüche, **dadurch gekennzeichnet, dass** es nach dem ersten Schritt (1) einen Verfolgungsschritt (2) während der M Umdrehungen enthält, um die Auflösungszellen zu bestimmen, in denen sich das Ziel im Verlauf der M Umdrehungen befindet.

5. Verfahren nach einem der vorhergehenden Ansprüche, **dadurch gekennzeichnet, dass** dem ersten Schritt ein Schritt des Weißmachens des Rauschens vorausgeht.

6. Verfahren nach einem der vorhergehenden Ansprüche, **dadurch gekennzeichnet, dass** die Normierung $N(i, k, j, 1)$ gleich 1 ist.

7. Verfahren nach einem der vorhergehenden Ansprüche, **dadurch gekennzeichnet, dass** das Ziel ein Seeziel in Gegenwart von Meeresstörungen ist.

ESTIMATION DE LA FRÉQUENCE DOPPLER — 1

PISTAGE SUR M TOURS — 2

DÉTECTION — 3

**FIG.1**

TEMPS
(BALAYAGE DE L'ANTENNE)

DISTANCES

22

23

21

$x_1$, DISTANCE $d_1$ — 24

TOUR 1
(INSTANT t)

$$\widehat{\Delta d} = \frac{\lambda \widehat{F_d}}{2} \Delta t$$

21'

TOUR 2
(INSTANT t+$\Delta$t)

$x_2$, DISTANCE $d_1 + \widehat{\Delta d}$

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E.CONTE ; M.LOPS ; G.RICCI.** Asymptotically optimum radar détection in compound-gaussian clutter. *IEEE Trans.Electron.Syst.,* Avril 1995, vol. 31 (2), 617-625

- **F.GINI.** Sub-optimum coherent radar detection in a mixture of K-distributes and gaussian clutter. *IEE Proc.-Radar Sonar Navig.,* Février 1997, vol. 144 (1), 39-48
- **J.E.MOYAL.** Quantum mecanics as a statistical theory. *Proc.Cambridge Phil.Soc.,* 1949, vol. 45, 99-124